# EUROPÄISCHE PATENTSCHRIFT

(11) **EP 0 616 913 B1**
(45) Veröffentlichungstag und Bekanntmachung des Hinweises auf die Patenterteilung: **04.11.1998**
(21) Anmeldenummer: 94102462.2
(22) Anmeldetag: 18.02.1994
(51) Int. Cl.: B60H 1/00

(54) **Hochtemperaturbatterie**
High-temperature battery
Batterie à haute température

(30) Priorität: 24.03.1993 DE 4309621
(43) Veröffentlichungstag der Anmeldung: 28.09.1994
(73) Patentinhaber: DAIMLER-BENZ AKTIENGESELLSCHAFT, 70567 Stuttgart (DE)
(72) Erfinder: Sahm, Dietrich, Dr. Dipl.-Ing., D-72574 Bad Urach (DE); von Scarpatetti, Diether, Dipl.-Ing., D-73734 Esslingen (DE); Bull, Rodger Nr., Mickleover, Derby, DE35NY (GB)

(56) Entgegenhaltungen:
- DE-A- 2 414 758
- DE-A- 2 416 807
- DE-A- 2 638 862
- DE-A- 3 316 512
- FR-A- 2 601 907

## Beschreibung

Die Erfindung betrifft eine Hochtemperaturbatterie, insbesondere zur Energieversorgung von Fahrzeugen mit Elektroantrieb, mit einem thermisch isolierenden Gehäuse zur Vermeidung thermischer Verluste und einem Kühlsystem zur Begrenzung der Betriebstemperatur beim Laden der Batterie sowie bei der Stromentnahme.

Im Hinblick auf ihre vergleichsweise große Energiedichte sind Hochtemperaturbatterien für Elektrofahrzeuge besonders vorteilhaft.

Diese Hochtemperaturbatterien müssen zur Vermeidung thermischer Verluste thermisch gut isoliert sein. Andererseits benötigen derartige Batterien ein Kühlsystem, um ein übermäßiges Aufheizen der Batterie während der Stromentnahme bzw. beim Laden der Batterie zu vermeiden.

Grundsätzlich kann die Abwärme des Kühlsystems zur Beheizung des Innenraumes eines Fahrzeuges genutzt werden. Jedoch sind die Abwärmemengen im Vergleich zur benötigten Heizleistung relativ gering.

Deshalb wird nach der DE 41 41 811 C1 vorgesehen, das Fahrzeug beim Laden der Batterie, d.h. beim Anschluß des Fahrzeuges an ein externes Elektrizitätsnetz, vorzuheizen und beim Fahrbetrieb die durch die Vorheizung bereits erzielte Erwärmung des Fahrzeuges im wesentlichen nur aufrechtzuerhalten. Für die Aufrechterhaltung der Erwärmung reicht die Abwärme der Hochtemperatur regelmäßig aus.

Hier wird also der allgemeine Gedanke verwirklicht, die Abwärme des Kühlsystems der Batterie bei deren Nachladung im Sinne einer Standheizung einzusetzen, so daß der Fahrzeuginnenraum während der Ladephase erwärmt werden kann.

Bei klimatisch sehr ungünstigen Verhältnissen kann über das Elektrizitätsnetz, aus dem die Batterie nachgeladen wird, noch eine zusätzliche Elektroheizung des Fahrzeuges betrieben werden.

Im übrigen kann auch die thermische Energie der Hochtemperaturbatterie ausgenutzt werden, indem beim Laden der Batterie ein Temperaturanstieg bis zur maximal zulässigen Betriebstemperatur zugelassen wird. Damit kann dann während der Fahrt eine entsprechend vermehrte Wärmemenge über das Kühlsystem der Batterie für die Fahrzeugheizung nutzbar gemacht werden.

Hinsichtlich des Kühlsystems ist aus der DE-A 26 38 862 bekannt, im Falle einer Luftkühlung der Batterie innerhalb der Batterie geschlossene Kühlluftkanäle vorzusehen und insbesondere eine Verbindung mit den Einfüllöffnungen der Batteriezellen zu vermeiden, damit die von den Batteriezellen entwickelten Gase nicht in die Fahrgastzelle gelangen können. Insgesamt erhält dadurch das Kühlsystem eine konstruktiv aufwendige Struktur.

Aufgabe der Erfindung ist es nun, die Kühlung einer Hochtemperaturbatterie bei höchster Sicherheit gegen das Austreten von Gasen und Dämpfen od.dgl. konstruktiv zu vereinfachen.

Diese Aufgabe wird erfindungsgemäß dadurch gelöst, daß zur Wärmeentnahme aus der Batterie innerhalb des thermisch isolierenden Batteriegehäuses ein luftdurchströmter Kühlkörper angeordnet ist, welcher hermetisch dicht ist und lediglich mit an ihm angeordneten Lufteinlaß- bzw. Luftauslaßstutzen die thermisch isolierende Wandung des Gehäuses der Batterie durchsetzt, wobei der Kühlkörper im wesentlichen die Form eines plattenförmigen Hohlkörpers besitzt.

Der Kühlkörper kann als Baueinheit vorgefertigt und bei der Montage des Batteriegehäuses komplett montiert werden, so daß der Herstellungsaufwand insgesamt deutlich vermindert wird. Gleichzeitig ist eine hohe Sicherheit gegen das Austreten von Gasen und Dämpfen u.dgl. gegeben.

Die Ausbildung des Kühlkörpers als plattenförmiger Hohlkörper bietet den besonderen Vorzug, daß einerseits durch eine großflächige Ausbildung gegebenenfalls größere Wärmemengen aufgenommen und abgeführt werden können. Andererseits tritt innerhalb des Hohlkörpers nur eine praktisch vernachlässigbare Konvektionsströmung auf, so daß ohne besondere Maßnahmen ein unerwünschter Wärmeverlust nach außen vermieden werden kann, etwa wenn eine Kühlung der Batterie nicht notwendig ist. Im wesentlichen können nur dann nennenswerte Wärmemengen aus der Batterie entnommen werden, wenn der Kühlkörper mittels eines Gebläses od. dgl. zwangsbelüftet wird.

Im übrigen wird hinsichtlich bevorzugter Merkmale der Erfindung auf die nachfolgende Erläuterung vorteilhafter Ausführungsformen verwiesen, die in der Zeichnung dargestellt sind.

Dabei zeigt
- Fig. 1: eine Gesamtansicht einer Hochtemperaturbatterie mit luftdurchströmtem Kühlkörper,
- Fig. 2: einen Horizontalschnitt des Kühlkörpers und
- Fig. 3: eine schematisierte Gesamtdarstellung einer Fahrzeugheizung bei der die Abwärme einer Hochtemperaturbatterie ausgenutzt wird.

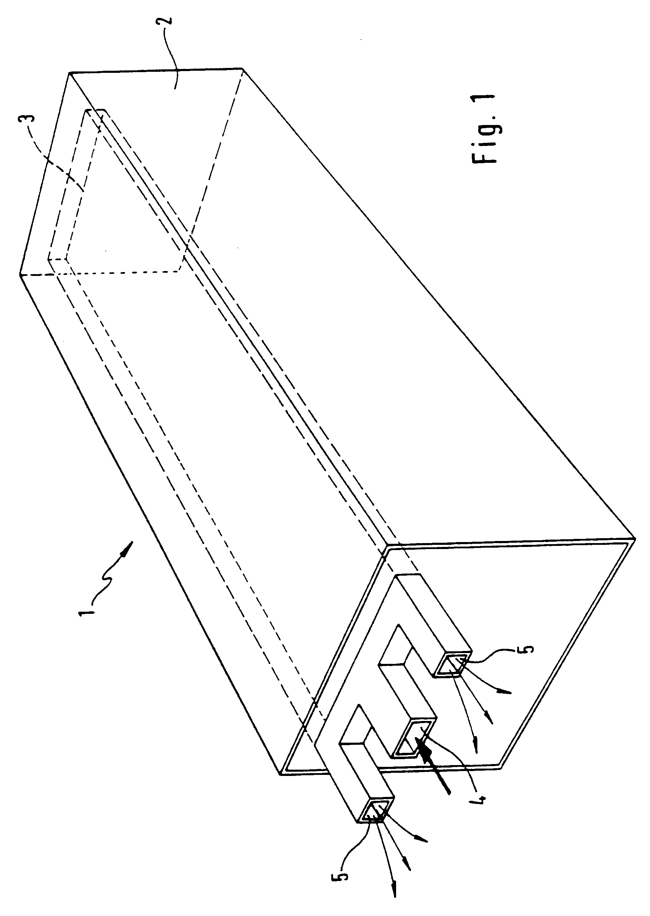

Die in Fig. 1 dargestellte Hochtemperaturbatterie 1, welche beispielsweise in grundsätzlich bekannter Weise durch ein Natrium-Nickel-Chlorid-System gebildet sein kann, besitzt ein thermisch isolierendes Gehäuse 2, um Wärmeverluste nach Möglichkeit zu vermeiden.

Die Betriebstemperatur der Batterie 1 liegt zwischen beispielsweise 250 und 370° C. Bei der Stromentnahme aus der Batterie sowie beim Laden der Batterie 1 tritt eine relativ starke Temperaturerhöhung der Batterie 1 auf; dies wird durch den inneren elektrischen Widerstand der Batterie 1 verursacht. Aus diesem Grunde muß die Batterie 1 ein Kühlsystem besitzen, um einen übermäßigen Temperaturanstieg vermeiden zu können.

Gemäß einer bevorzugten Ausführungsform der Erfindung ist zu diesem Zweck innerhalb des Gehäuses 2 im oberen Gehäusebereich ein im wesentlichen plattenförmiger, luftdurchströmter Kühlkörper 3 angeordnet, welcher einen Lufteinlaßstutzen 4 sowie zwei Luftauslaßstutzen 5 besitzt. Nur die Lufteinlaßbzw. Luftauslaßstutzen 4 und 5 durchdringen die Wandung des Gehäuses 2, im übrigen ist der Kühlkörper 3 vollständig innerhalb des Gehäuses 2 angeordnet.

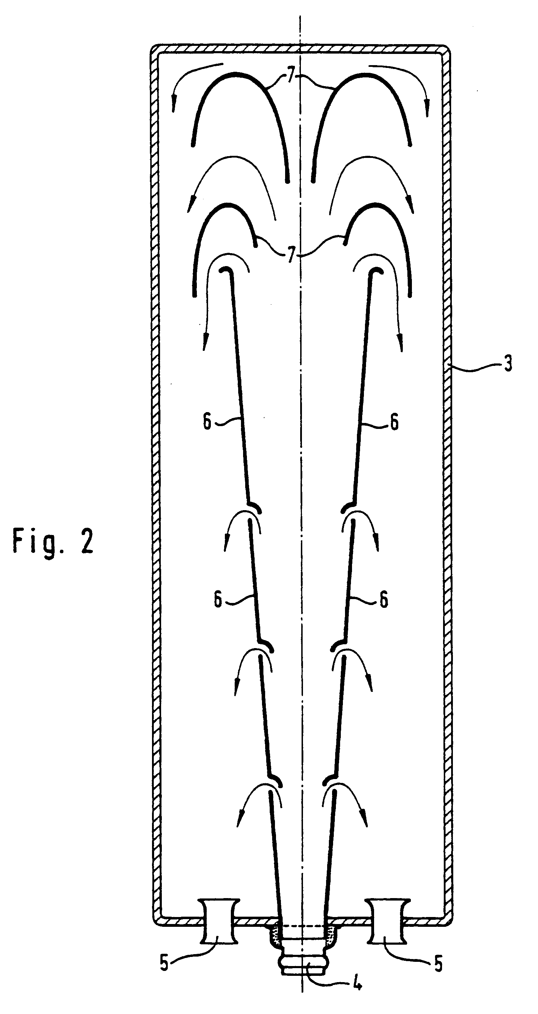

Gemäß Fig. 2 sind innerhalb des Kühlkörpers 3 Luftleitbleche 6 und 7 angeordnet, durch die die über den Lufteinlaßstutzen 4 zugeführte Luft innerhalb des Kühlkörpers 3 so verteilt wird, daß alle Bereiche des Kühlkörpers 3 in etwa gleicher Weise kühlwirksam sind.

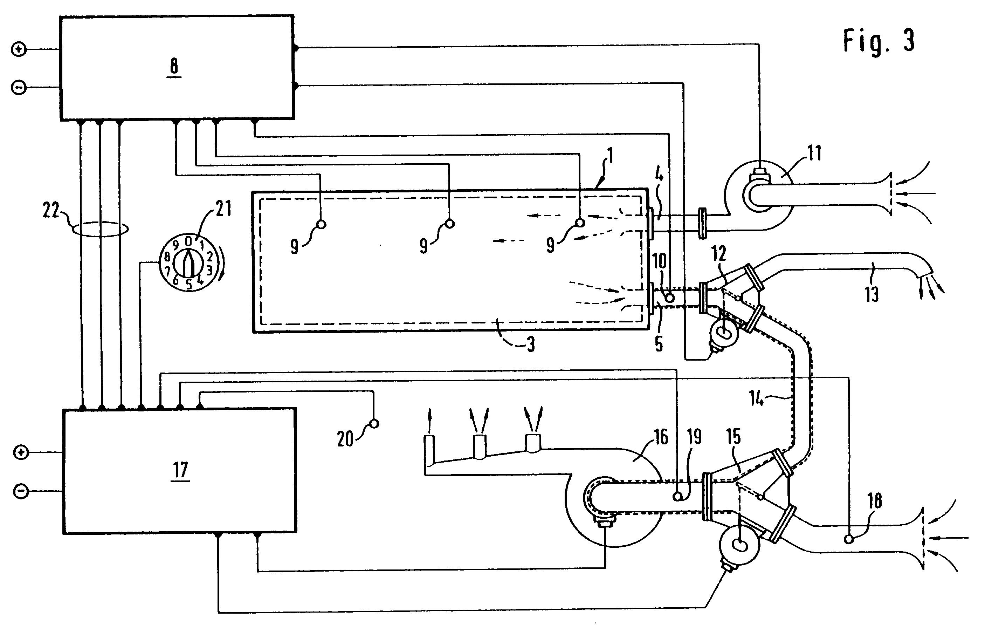

Gemäß Fig. 3 besitzt die Batterie 1 eine Überwachungsschaltung 8, welche mit mehreren, beispielsweise drei Temperatursensoren 9 im Innenraum des Gehäuses 2 der Batterie sowie einem weiteren Temperatursensor 10 zur Überwachung der aus dem Kühlkörper 3 abströmenden Luft verbunden ist und ein dem Lufteinlaßstutzen 4 des Kühlkörpers 3 zugeordnetes Kühlgebläse 11 steuert. Außerdem steuert die Überwachungsschaltung 8 noch ein Umschaltventil 12, mit dem die aus den Luftauslaßstutzen 5 des Kühlkörpers 3 austretende Luft über eine Ausblasleitung 13 direkt nach außen abgeführt oder über eine thermisch isolierte Leitung 14 einem Luftmischer 15 zugeführt werden kann, welcher eingangsseitig eines Heizgebläses 16 angeordnet ist, mit dem der Innenraum des Fahrzeuges mit Heizluft beliefert wird.

Zur Steuerung der Fahrzeugheizung dient eine Regelschaltung 17, welche mit verschiedenen Temperatursensoren 18 bis 20 zur Ermittlung der Temperatur der Außenluft, der Temperatur der Heizluft, d.h. der dem Heizgebläse 16 zugeführten Luft, und der Temperatur des Innenraumes verbunden ist. Diese Regelschaltung 17 steuert einerseits das Heizgebläse 16 und andererseits den Stellmotor des Luftmischers 15, so daß der über die Leitung 14 zugeführten heißen Luft mehr oder weniger viel Frischluft zugeführt wird. Im übrigen ist die Regelschaltung 17 mit einem Temperatur-Sollwertgeber 21 verbunden.

Die Regelschaltung 17 und die Überwachungsschaltung 8 sind miteinander zum Datenaustausch über Leitungen 22 vernetzt, so daß die Überwachungsschaltung 8 "weiß", ob ein Heizbedarf besteht. Andererseits "weiß" die Regelschaltung 17, welche Temperatur die Batterie 1 bzw. die aus dem Kühlkörper 3 abgeführte Luft hat.

Aufgrund des Datenaustausches zwischen der Überwachungsschaltung 8 und der Regelschaltung 17 kann der Betrieb der Batterie 1 den jeweiligen Umständen angepaßt werden. Wenn überhaupt kein Heizungsbedarf besteht, wird die Temperatur der Batterie 1 auf einem Niveau gehalten, wie es für die alleinige Versorgung des Elektroantriebes des Fahrzeuges optimal ist.

Wenn dagegen ein Heizungsbedarf besteht, kann insbesondere beim Laden der Batterie eine hohe Temperatur zugelassen bzw. angestrebt werden. In diesem Falle wird also die Batterie nicht nur als Speicher elektrischer Energie sondern auch als Wärmespeicher benutzt.

Da insgesamt bei der Stromentnahme für den Fahrbetrieb aus der Batterie 1 nur vergleichsweise wenig Wärme abgeführt werden kann, ist erfindungsgemäß vorgesehen, daß die beim Laden der Batterie 1 zwangsläufig anfallende Wärme zur Vorheizung des Fahrzeuges ausgenutzt wird.

Gegebenenfalls kann der vom Elektrizitätsnetz kommende Ladestrom auch noch eine nicht dargestellte Elektroheizung treiben, so daß auch unter ungünstigen Bedingungen gewährleistet ist, daß der Fahrzeuginnenraum bei Antritt einer Fahrt bereits in wünschenswerter Weise aufgeheizt ist.

Damit braucht beim Fahrbetrieb die zuvor bereits erreichte Erwärmung lediglich aufrechterhalten zu werden, wofür vergleichsweise geringe Wärmemengen genügen, insbesondere, wenn der Fahrzeuginnenraum eine hinreichend wirksame Wärmeisolierung besitzt.

Die Überwachungsschaltung 8 und die Regelschaltung 17 arbeiten derart zusammen, daß vorrangig ein sicherer Fahrbetrieb bzw. eine angemessene Reichweite des Fahrzeuges gewährleistet sind. Dies bedeutet, daß die Einhaltung einer optimalen Betriebstemperatur der Batterie in der Regel mit Vorrang angestrebt wird und der Wärmebedarf der Fahrzeugheizung eine geringere Priorität hat.

Im übrigen ist durch Sicherheitsschaltungen gewährleistet, daß über das Umschaltventil 12 nur dann Heißluft aus dem Kühlkörper 3 der Batterie 1 zum Luftmischer 15 geführt wird, wenn der Luftmischer 15, das Heizgebläse 16 sowie die Regelschaltung 17 fehlerfrei arbeiten.

Abweichend von der dargestellten Ausführungsform kann die Wärme aus der Batterie 1 auch in anderer Weise abgeführt werden. Anstelle des luftdurchströmten Kühlkörpers 3 können auch sogenannte Wärmerohre installiert sein, um eine übermäßige Erhitzung der Batterie 1 verhindern zu können und die Wärme nach außen abzuführen.

Abweichend von der zeichnerisch dargestellten Ausführungsform kann der Kühlkörper 3 auch im unteren Bereich des Gehäuses 2 der Batterie, d.h. unter den Batteriezellen, angeordnet sein.

## Patentansprüche

1. Hochtemperaturbatterie (1), insbesondere zur Energieversorgung von Fahrzeugen mit Elektroantrieb, mit einem thermisch isolierenden Gehäuse (2) zur Vermeidung thermischer Verluste und einem Kühlsystem zur Begrenzung der Betriebstemperatur beim Laden der Batterie sowie bei der Stromentnahme,
**dadurch gekennzeichnet,**
daß zur Wärmeentnahme aus der Batterie (1) innerhalb des thermisch isolierenden Batteriegehäuses (2) ein luftdurchströmter Kühlkörper (3) angeordnet ist, welcher hermetisch dicht ist und lediglich mit an ihm angeordneten Lufteinlaß- bzw. Luftauslaßstutzen (4, 5) die thermisch isolierende Wandung des Gehäuses (2) der Batterie durchsetzt, wobei der Kühlkörper im wesentlichen die Form eines plattenförmigen Hohlkörpers besitzt.

2. Hochtemperaturbatterie nach Anspruch 1,
**dadurch gekennzeichnet,**
daß der plattenförmige Hohlkörper horizontal über oder unter den Zellen der Hochtemperaturbatterie angeordnet ist.

3. Hochtemperaturbatterie nach Anspruch 1,
**dadurch gekennzeichnet,**
daß innerhalb des Kühlkörpers (3) Luftleitbleche (6, 7) angeordnet sind, durch die die über den Lufteinlaßstutzen (4) zugeführte Luft innerhalb des Kühlkörpers (3) so verteilt wird, daß alle Bereiche des Kühlkörpers (3) in etwa gleicher Weise kühlwirksam sind.

4. Hochtemperaturbatterie nach Anspruch 3,
**dadurch gekennzeichnet,**
daß die Luftleitbleche (6, 7) so angeordnet sind, daß sich für die durchströmende Luft im wesentlichen ein in Strömungsrichtung sich aufweitender Luftkanal ergibt.

5. Hochtemperaturbatterie nach Anspruch 4,
**dadurch gekennzeichnet,**
daß der Einlaßstutzen (4) mittig und zwischen den beiden Auslaßstutzen (5) an der Schmalseite des Kühlkörpers (3) angeordnet ist.

6. Hochtemperaturbatterie nach Anspruch 4 und 5,
**dadurch gekennzeichnet,**
daß die durch den Einlaßstutzen (4) einströmende Luft innerhalb des plattenförmigen Kühlkörpers an seinem Ende aufgeteilt und in zwei außen liegende, durch Luftleitbleche (6) und den Wänden des Kühlkörpers gebildete Luftkanäle umgelenkt wird, welche die Luft den beiden Auslaßstutzen (5) zuführen.

7. Hochtemperaturbatterie nach Anspruch 6,
**dadurch gekennzeichnet,**
daß zur Umlenkung der Luft am Ende des Kühlkörpers bogenförmige Luftleitbleche (7) vorgesehen sind.

## Claims

1. High-temperature battery (1), in particular for supplying power to vehicles with electric drive, having a thermally insulating housing (2) in order to avoid thermal losses and a cooling system in order to limit the operating temperature during charging of the battery and during the power drain, characterized in that in order to remove heat from the battery (1), a cooling element (3) through which air flows is arranged inside the thermally insulating battery housing (2) is hermetically sealed and only penetrates the thermally insulating wall of the battery housing (2) with air inlet and air outlet connecting elements (4, 5) arranged on it, the cooling element being essentially in the form of a plate-shaped hollow element.

2. High-temperature battery according to Claim 1, characterized in that the plate-shaped hollow element is arranged horizontally above or below the cells of the high-temperature battery.

3. High-temperature battery according to Claim 1, characterized in that arranged within the cooling element (3) are air baffles (6, 7) by means of which the air fed by the air inlet connecting element (4) is distributed within the cooling element (3) in such a way that all the regions of the cooling element (3) have a cooling effect in approximately the same way.

4. High-temperature battery according to Claim 3, characterized in that the air baffles (6, 7) are arranged in such a way that essentially an air passage which extends in the direction of flow is produced for the through-flowing air.

5. High-temperature battery according to Claim 4, characterized in that the inlet connecting element (4) is arranged centrally and between the two outlet connecting elements (5) on the narrow side of the cooling element (3).

6. High-temperature battery according to Claims 4 and 5, characterized in that the air flowing in through the inlet connecting element (4) is divided up within the plate-shaped cooling element at its end and is diverted into two air passages which are located on the outside, are formed by air baffles (6) and the walls of the cooling element and feed the air to the two outlet connecting elements (5).

7. High-temperature battery according to Claim 6, characterized in that arcuate air baffles (7) are provided to deflect the air at the end of the cooling element.

## Revendications

1. Batterie d'accumulateurs haute température (1), notamment destinée à subvenir aux besoins énergétiques de véhicules à entraînement électrique, comprenant un carter (2) thermiquement isolant destiné à éviter les pertes thermiques, et un système de refroidissement destiné à limiter la température de fonctionnement lors de la charge de la batterie ainsi que lors de la restitution du courant,
**caractérisée** en ce que pour prélever de la chaleur de la batterie (1), à l'intérieur du carter de batterie (2) thermiquement isolant, est disposé un corps de refroidissement (3) traversé par un écoulement d'air, qui est hermétiquement étanche et traverse la paroi thermiquement isolante du carter (2) de la batterie, exclusivement par des embouts d'entrée d'air et de sortie d'air (4, 5) disposés sur ce corps de refroidissement, celui-ci présentant sensiblement la forme d'un corps creux plat.

2. Batterie haute température selon la revendication 1, **caractérisée** en ce que le corps creux plat est placé horizontalement au-dessus ou en-dessous des éléments de la batterie haute température.

3. Batterie haute température selon la revendication 1, **caractérisée** en ce qu'à l'intérieur du corps de refroidissement (3) sont disposés des déflecteurs d'air (6, 7) à l'aide desquels l'air amené par l'intermédiaire de l'embout d'entrée d'air (4) est réparti à l'intérieur du corps de refroidissement (3) de façon à ce que toutes les zones du corps de refroidissement (3) aient une action de refroidissement sensiblement de même nature.

4. Batterie haute température selon la revendication 3, **caractérisée** en ce que les déflecteurs d'air (6, 7) sont disposés de manière à ce qu'il en résulte sensiblement pour l'air s'y écoulant, un canal d'air s'évasant dans la direction de l'écoulement.

5. Batterie haute température selon la revendication 4, **caractérisée** en ce que l'embout d'entrée (4) est disposé au centre entre les deux embouts de sortie (5), sur le petit côté du corps de refroidissement (3).

6. Batterie haute température selon les revendications 4 et 5, **caractérisée** en ce que l'écoulement d'air entrant par l'embout d'entrée (4) est divisé, à l'intérieur du corps de refroidissement plat, à l'extrémité de celui-ci, et subit un renvoi dans deux canaux d'air qui sont situés à l'extérieur, sont formés par des déflecteurs d'air (6) et les parois du corps de refroidissement, et qui conduisent l'air aux deux embouts de sortie (5).

7. Batterie haute température selon la revendication 6, **caractérisée** en ce que pour le renvoi de l'air à l'extrémité du corps de refroidissement sont disposés des déflecteurs d'air (7) courbés en forme d'arc.
